Europäisches Patentamt

**European Patent Office**

**Office européen des brevets**

(19)

(11) Veröffentlichungsnummer: **0 155 608**
A2

(12) **EUROPÄISCHE PATENTANMELDUNG**

(21) Anmeldenummer: **85102692.2**

(22) Anmeldetag: **09.03.85**

(51) Int. Cl.⁴: **A 01 B 59/04**
**A 01 B 73/06, A 01 C 11/00**

(30) Priorität: **23.03.84 US 592627**

(43) Veröffentlichungstag der Anmeldung:
**25.09.85 Patentblatt 85/39**

(84) Benannte Vertragsstaaten:
**DE FR GB**

(71) Anmelder: **DEERE & COMPANY**
**1 John Deere Road**
**Moline Illinois 61265(US)**

(72) Erfinder: **Salley, Gordon Lee**
**3724 - 14th Street**
**Moline Illinois 61265(US)**

(72) Erfinder: **Landphair, Donald Keith**
**3965 Wakonda Drive**
**Bettendorf Iowa 52722(US)**

(74) Vertreter: **Sartorius, Peter et al,**
**DEERE & COMPANY European Office, Patent**
**Department Postfach 503 Steubenstrasse 36-42**
**D-6800 Mannheim 1(DE)**

(54) **Geräterahmen für Bodenbearbeitungswerkzeuge oder Säeinrichtungen.**

(57) Der Geräterahmen einer Sämaschine ist mittels zweier in Arbeitsstellung V-förmig zueinander verlaufender Gestänge an ein Zugfahrzeug anschließbar. Die in Fahrtrichtung hinten liegenden Enden der Gestänge (12) sind an höhenbeweglichen, gelenkig miteinander verbundenen Rahmenträgern angeschlossen. Um eine Verdrehung der Gestänge um ihre Längsmittelachse zu verhindern, sind sie mit eine allseitige Bewegung zulassenden Kugelgelenken (37) ausgerüstet, die in einem Tragteil (34) aufgenommen sind, der über einen gabelförmigen, horizontal schwenkbaren Gelenkteil mittels eines Kupplungsbolzens (13) an ein Zugfahrzeug anschließbar ist.

FIG. 2

FIG. 3

## Geräterahmen für Bodenbearbeitungswerkzeuge oder Säeinrichtungen

Die Erfindung bezieht sich auf einen Geräterahmen für Bodenbearbeitungswerkzeuge oder Säeinrichtungen mit zwei mittels eines horizontal verlaufenden Gelenkbolzens vertikal verstellbaren und miteinander verbundenen, quer verlaufenden Rahmenträgern und zwei sich in Fahrtrichtung erstreckenden Gestängen, deren vordere Enden mittels einer zumindest eine horizontale und eine vertikale Verschwenkung zulassenden Kupplungsvorrichtung an ein Zugfahrzeug und deren hintere Enden jeweils an die Rahmenträger gelenkig angeschlossen sind.

Es ist bereits ein auf Laufrädern abstützbarer Geräterahmen mit horizontal schwenkbaren Rahmenträgern bekannt, die über zwei V-förmig nach vorne zusammenlaufende Gestänge an einen sich in Fahrtrichtung erstreckenden Träger angeschlossen sind, der über eine Gelenkverbindung mit einem Zugfahrzeug verbindbar ist (US-A-4 137 852). Die Rahmenträger lassen sich von einer Arbeitsstellung, in der sie auf einer gleichen Querebene liegen, in eine Transportstellung verschwenken, wozu die beiden Gestänge nach vorne verstellt werden und dabei eine Lage einnehmen, in der sie parallel zueinander verlaufen. Um eine Verschwenkung der Gestänge zu ermöglichen, sind diese über Kupplungsbolzen an die am Zugfahrzeug vorgesehene Anhängevorrichtung horizontal schwenkbar angeschlossen. Befinden sich die Rahmenträger in einer Arbeitsstellung und verschwenken diese um eine horizontal verlaufende Achse, so wird diese Bewegung auch auf die Gestänge übertragen und dabei eine geringfügige Verdrehung um ihre horizontal verlaufende Längsmittelachse herbeigeführt. Arbeiten beispielsweise derartige Geräte auf sehr unebenem Gelände, so sind die Gestänge einer sehr starken Beanspruchung ausgesetzt.

Demgegenüber liegt der Erfindung die Aufgabe zugrunde, die Kupplungsvorrichtung zur Verbindung der Gestänge mit einem Anschlußteil bzw. einer Kupplungsvorrichtung eines Zugfahrzeuges derart auszubilden, daß diese ohne weiteres mit den Rahmenträgern verschwenkt werden können, ohne daß eine Beschädigung an den Gestängen auftritt. Diese Aufgabe ist dadurch gelöst worden, daß die Kupplungsvorrichtung zwischen den beiden Gestängen und einem Anschlußteil angeordnet ist und einen an das Zugfahrzeug anschließbaren und mit den Gestängen verbindbaren Tragteil aufweist, der mit Gelenkteilen derart bestückt ist, daß die Gestänge mit Bezug auf die Kupplungsvorrichtung um eine bzw. um ihre Längsmittelachse drehen können und dabei eine Vertikalverstellung der Rahmenträger zulassen. Durch die vorteilhafte Zuordnung von eine allseitige Verdrehung zulassenden Gelenkteilen am Tragteil der Kupplungsvorrichtung wird eine Höhenverstellung der sich in Arbeitsstellung befindlichen Rahmenträger ermöglicht und somit gleichzeitig eine Drehung der Gestänge um ihre horizontal verlaufende Längsmittelachse, ohne daß die Gestänge Torsionsspannungen ausgesetzt sind. Hierzu ist es vorteilhaft, daß die Kupplungsvorrichtung zumindest ein Kugelgelenk aufweist, das innerhalb einer Lagerfläche eines Gelenkteiles der Kupplungsvorrichtung drehbar aufgenommen ist, wobei das Kugelgelenk mit einer Bohrung zur Aufnahme eines Kupplungsbolzens versehen ist, der das Kugelgelenk mit dem zugehörigen Gestänge verbindet, und daß der Gelenkteil der Kupplungsvorrichtung als Gabel mit zwei übereinander liegenden Schenkeln ausgebildet ist, in denen koaxial zueinander verlaufende Bohrungen zur Aufnahme eines die Gabel mit der Anhängevorrichtung eines Zugfahrzeuges verbindenden Kupplungsbolzens angeordnet sind. Durch die Verwendung von Kugelgelenken, die eine Anschlußverbindung zwischen den Gestängen und der Kupplungsvorrichtung herstellen, wird auf einfache Weise die Drehung der Gestänge um ihre horizontal verlaufende Längsmittelachse

0155608

möglich. Eine derartige Kupplungsvorrichtung mit den zugehörigen Kugelgelenken läßt sich relativ leicht herstellen und ist daher auch sehr kostengünstig. Ferner läßt sich auf diese Weise neben einer Horizontalverschwenkung eine Drehung der Gestänge um ihre Längsmittelachse sowie eine Vertikalverschwenkung sicherstellen, ohne daß eine Beschädigung an den einzelnen Geräteteilen bzw. Rahmenteilen auftritt.

In weiterer Ausgestaltung der Erfindung ist es vorteilhaft, daß die Kupplungsvorrichtung aus zwei nach vorne V-förmig zusammenlaufenden Gabeln gebildet ist, die zur Aufnahme eines gemeinsamen Kupplungsbolzens ineinandergesteckt werden können, und daß an einem jeden gabelförmigen Gelenkteil ein Tragteil zur Aufnahme von Kugelgelenken angeschlossen ist, wobei die Tragteile mit Bezug auf die in Fahrtrichtung verlaufende Längsmittelachse des Geräterahmens seitlich versetzt angeordnet sind und zwischen sich die beiden Gestänge zum Anschluß des Geräterahmens an ein Zugfahrzeug aufnehmen. Vorteilhaft ist es außerdem, daß die in Arbeitsstellung V-förmig und in Transportstellung parallel zueinander verlaufenden, verstellbaren Gestänge aus je einem Rohr gebildet sind, das an seinem in Fahrtrichtung vorne liegenden Ende je einen Tragteil aufnimmt, wobei das in Fahrtrichtung hinten liegende Ende des Rohres an je einem quer verlaufenden, horizontal und vertikal verschwenkbaren Rahmenträger angeschlossen ist, der bei einer Höhenbewegung eine Drehung des Rohres um seine horizontal verlaufende Längsachse bewirkt. Durch die V-förmige Ausbildung der Gabeln zum Anschluß der Lenker, beispielsweise an die Anhängevorrichtung eines Zugfahrzeuges, lassen sich die Lenker ohne weiteres relativ weit auseinander schwenken und somit eine einfache Verstellung der Arbeitswerkzeuge von ihrer Transportstellung, in der sie nebeneinander verlaufen, in eine Arbeitsstellung vornehmen. Um eine einfache Verbindung beider Lenker, beispielsweise an einen vertikal verlaufenden Kupplungsbolzen, vornehmen zu können, werden diese ineinandergesteckt. Hierzu sind die einzelnen Schenkel, die die Gabel bilden, mit Abstand zueinander angeordnet, so daß jeweils zwei Gabeln ineinandergefügt werden, bis die zugehörigen Bohrungen in den Schenkeln der Gabeln vorgesehen sind und miteinander fluchten, und somit ein vertikal verlaufender Kupplungsbolzen aufgenommen werden kann, der eine Horizontalverschwenkung der gesamten Kupplungsvorrichtung gestattet. Damit die in der Transportstellung parallel zueinander verlaufenden Gestänge möglichst dicht aneinander herangeschwenkt werden können, sind die nebeneinander liegenden Tragteile mit Abstand zueinander angeordnet, der in etwa den Abständen der beiden Längsmittelachsen der Gestänge entspricht.

Da der Tragteil aus zwei über einen Steg miteinander verbundenen, diamantförmig ausgebildeten Aufnahmeteilen besteht, in denen je ein allseitig bewegliches Kugelgelenk aufgenommen ist, die über Kupplungsbolzen innerhalb des rohrförmigen Gestänges gesichert sind, läßt sich auf einfache Weise ein Kippen der Tragteile auf den zugehörigen Kupplungsbolzen vornehmen, so daß hierdurch auch eine Drehung der in dem Gestänge angeordneten Tragteile ermöglicht wird, so daß diese bei einer Höhenverstellung der nebeneinander verlaufenden Geräteträger keinen Biege- bzw. Torsionskräften ausgesetzt sind. Hierzu ist es vorteilhaft, daß die Aufnahmeteile je zwei obere und zwei untere V-förmig zueinander verlaufende Seiten aufweisen, die bei Drehung um eine horizontal verlaufende Längsmittelachse gegen die parallel zueinander verlaufenden Seitenwände des rohrförmigen Gestänges zur Anlage kommen können. Die schräg verlaufenden Seiten gestatten über einen großen Stellbereich eine Drehung der horizontal verlaufenden Lenker, bis diese gegen die Innenoberfläche der Seitenwände der Lenker zur Anlage kommen. Eine gute Verbindung zwischen den Kugelgelenken und den Lenkern erhält man dadurch, daß die Kupplungsbolzen sich durch die Bohrungen der Kugelgelenke und durch die in den Seitenwänden der Gestänge vorgesehenen Bohrungen erstrecken und mittels Federringen und Muttern gesichert sind. Hierzu ist es ferner vorteilhaft, daß die Mittelachse der Bohrungen der Kugelgelenke in Normalstellung in einer in etwa horizontal verlaufenden und die Lagerflächen der Kugelgelenke in einer in etwa vertikal verlaufenden Ebene liegen.

Im folgenden wird die Erfindung anhand von lediglich einen Ausführungsweg darstellenden Zeichnungen näher erläutert. Es zeigt:

Fig. 1      eine Draufsicht eines Geräterahmens mit zahlreichen nebeneinander angeordneten Arbeitswerkzeugen, beispielsweise Säeinrichtungen,

Fig. 2      eine Seitenansicht einer Kupplungsvorrichtung,

Fig. 3      eine Draufsicht der Kupplungsvorrichtung mit den zugehörigen Kugelgelenken,

Fig. 4      einen Schnitt entlang der Linie 4 - 4 gemäß Fig. 2,

Fig. 5      einen Schnitt entlang der Linie 5 - 5 gemäß Fig. 2,

Fig. 6 und 7  die Kugelgelenke in verschiedenen Stellungen im Längsschnitt.

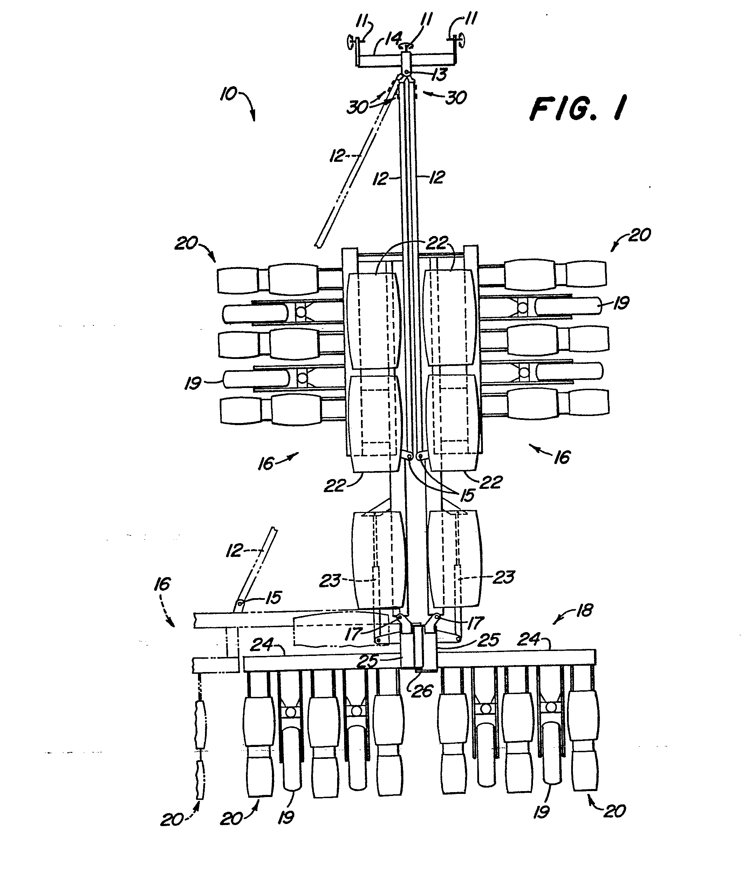

In der Zeichnung ist mit 10 ein Arbeitsgerät dargestellt, das beispielsweise als Bodenbearbeitungsgerät bzw. als Sämaschine ausgebildet sein kann und das über zwei sich in Fahrtrichtung erstreckende Gestänge 12 über einen vertikal verlaufenden Kupplungsbolzen 13 an eine Anhängeschiene 14 eines in der Zeichnung nicht dargestellten Schleppers gelenkig angeschlossen ist. Die hinteren Enden der Gestänge 12 sind über Gelenkbolzen 15 an rechte und linke Rahmenträger 16 angeschlossen. Die Anhängeschiene ist über Kugelgelenke 11 an in der Zeichnung nicht dargestellte untere Lenker eines in der Zeichnung ebenfalls nicht dargestellten Schleppers gelenkig angeschlossen. Die Anhängeschiene 14 gestattet mittels der Kugelgelenke 11 eine allseitige Drehung der Gestänge 12 gegenüber der Anhängeschiene 14. Das Arbeitsgerät weist zwei spiegelbildlich ausgebildete Rahmenträger 16 auf, die mittels vertikal verlaufender Kupplungsbolzen 17 an einen Zentralrahmen 18 gelenkig angeschlossen sind. Die einzelnen Rahmenträger 16 sowie der Zentralrahmen 18 stützen sich auf dem Boden mittels Laufrädern 19 ab. Die einzelnen Rahmenträger 16 sowie der Zentralrahmen 18 dienen zur Aufnahme von Säeinrichtungen 20 und zur Aufnahme von Sammelbehältern 22 zur Aufnahme von Saatgut und Düngemittel (siehe Fig. 1).

Das Arbeitsgerät 10 läßt sich aus einer Arbeitsstellung (siehe gestrichelte Darstellung einzelner Teile des Arbeitsgerätes gemäß Fig. 1) in eine in Fig. 1 in ausgezogenen Linien dargestellte Transportstellung verschwenken, indem hierzu Hydraulikzylinder 23 mit Druckmittel beaufschlagt werden und hierzu die entsprechenden Kolbenstangen ein- bzw. ausgefahren werden und somit die Rahmenträger 16 auf einem Kreisbogen um die Gelenkbolzen 17 verschwenken, bis sie ihre Transportstellung eingenommen haben.

Der Zentralrahmen 18 weist einen Querträger 24 auf, an dem zwei relativ kurze sich in Arbeitsrichtung erstreckende Tragteile 25 angeschlossen sind, die über einen horizontal sich in Arbeitsrichtung erstreckenden Gelenkbolzen 26 vertikal schwenkbar miteinander verbunden sind. Der horizontal verlaufende Gelenkbolzen 26 gestattet, wie bereits angedeutet, eine vertikale Verschwenkung der Querträger 24 und der zugehörigen Rahmenträger 16, wenn sich diese gemäß Fig. 1 in ihrer Arbeitsstellung befinden, d. h. auf einer Querebene liegen.

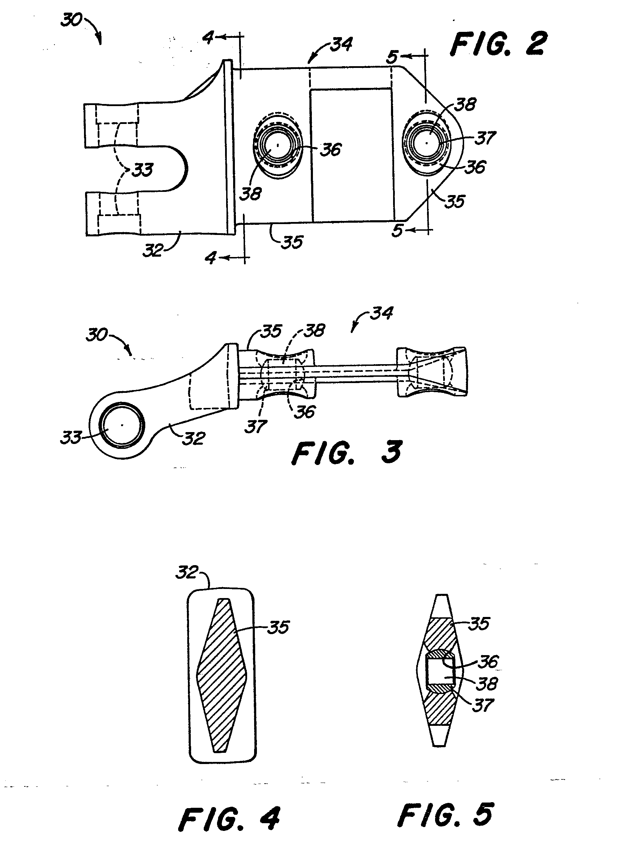

Das vordere Ende der Gestänge 12 trägt eine flexibel ausgebildete Kupplungsvorrichtung 30, die in einem bestimmten Bereich eine Drehung der Gestänge 12 gestattet, wenn die sich in Arbeitsstellung befindlichen Rahmenträger infolge von Bodenunebenheiten sich auf- und abwärts bewegen. Wie aus den Figuren 2 bis 5 hervorgeht, enthält die flexibel ausgebildete Kupplungsvorrichtung 30 einen gabelförmig ausgebildeten Gelenkteil 32, in dessen beiden Schenkeln zwei koaxial zueinander verlaufende Bohrungen 33 vorgesehen sind, die zur Aufnahme des vertikal verlaufenden Kupplungsbolzens 13 dienen. Die Kupplungsvorrichtung 30 weist ferner einen Tragteil 34 auf, der derart ausgebildet ist, daß er jeweils von dem entsprechenden Ende des rechteckförmig ausgebildeten Gestänges 12 aufgenommen werden kann. Der Tragteil 34 weist zwei im wesentlichen diamantförmig ausgebildete Aufnahmeteile 35 auf. Ein jeder Aufnahmeteil 35 dient zur Lagerung eines eine zentrisch angeordnete Bohrung 38 aufweisenden Kugelgelenkes 37 mit einer Lagerfläche 36.

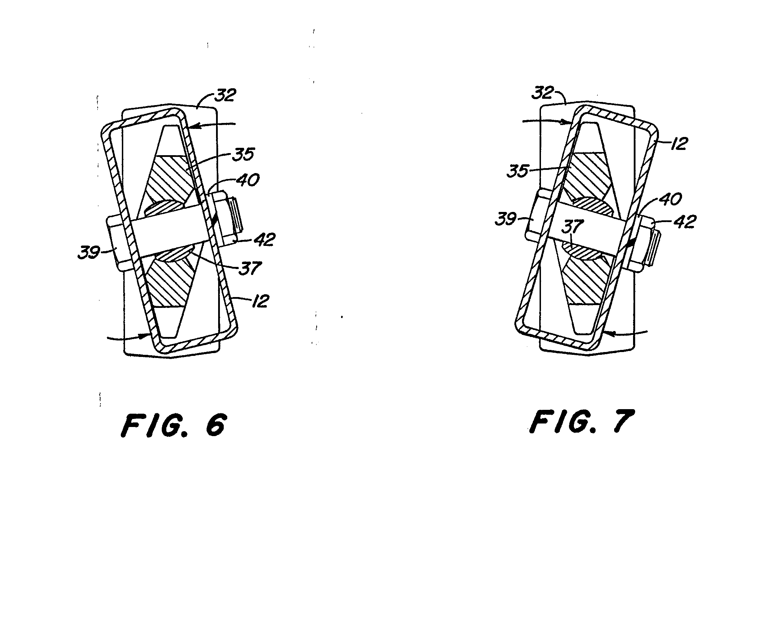

Im Arbeitseinsatz wird der Tragteil 34 der Kupplungsvorrichtung 30 in den rohrförmigen Enden der Gestänge 12 befestigt. Die Bohrung 38 des Kugelgelenkes 37 dient zur Aufnahme eines Kupplungsbolzens 39, der sich durch in dem Gestänge 12 vorgesehene Bohrungen erstreckt (siehe Fig. 6 und 7). Der Kupplungsbolzen 39 ist einenends mit Gewinde versehen, auf das eine Unterlagscheibe 40 und eine Mutter 42 aufgebracht sind. Wie aus Fig. 1 hervorgeht, ist die Kupplungsvorrichtung 30 jeweils in dem entsprechenden Ende des Lenkers angeordnet und mit diesen entsprechend verbunden. Der gabelförmig ausgebildete Gelenkteil 32 läuft, wie aus Fig. 1 und insbesondere aus Fig. 3 hervorgeht, mit Bezug auf den gegenüberliegenden Gelenkteil nach vorne zusammen, so daß die Bohrungen 33 der beiden Gelenkteile 32 untereinander liegen und somit der Kupplungsbolzen 13 in die Bohrungen 33 der beiden Gelenkteile 32 eingeführt werden kann. Wird beispielsweise das Arbeitsgerät in eine Arbeitsstellung gebracht, so gestattet der horizontal verlaufende Gelenkbolzen 26 eine vertikale Verstellung der Rahmenträger 16. Wie aus den Figuren 6 und 7 hervorgeht, dreht sich dabei das Gestänge 12 in einem gewissen Bereich im Uhrzeigerdrehsinn oder im entgegengesetzten Uhrzeigerdrehsinn um eine horizontal verlaufende Achse, so daß die Rahmenträger 16 frei verschwenkt werden können, ohne daß eine Verbiegung bzw. Beschädigung der Gestänge 12 zu befürchten ist.

Die Gestänge 12 sind somit in der Lage, um ihre Achsen der Kugelgelenke 37 zu schwenken, bis die diamantförmig ausgebildeten Aufnahmeteile 35 die Innenseiten der hohlförmig ausgebildeten Gestänge 12 berühren.

Die flexibel ausgebildete Kupplungsvorrichtung 30 ist zwischen den Gestängen 12 so ausgerichtet, daß die Bohrungen 38 der Kugelgelenke 37 im wesentlichen horizontal verlaufend ausgerichtet sind. Die Ausrichtung der Kugelgelenke 37 sowie der balligen Lagerflächen 36 fängt somit die vertikalen Kräfte, die auf das System einwirken, auf.

Die vertikale Verschwenkung der einzelnen Rahmenteile bewirkt, wie bereits beschrieben, eine Drehung um den horizontal verlaufenden Gelenkbolzen 26, um den Gelenkbolzen 15, die Kupplungseinrichtung 30, den vertikal verlaufenden Kupplungsbolzen 13 sowie um die Kugelgelenke 11.

Patentansprüche

1. Geräterahmen für Bodenbearbeitungswerkzeuge oder Säeinrichtungen mit zwei mittels eines horizontal verlaufenden Gelenkbolzens (26) vertikal verstellbaren und miteinander verbundenen, quer verlaufenden Rahmenträgern (16) und zwei sich in Fahrtrichtung erstreckenden Gestängen (12), deren vordere Enden mittels einer zumindest eine horizontale und eine vertikale Verschwenkung zulassenden Kupplungsvorrichtung (30) an ein Zugfahrzeug und deren hintere Enden jeweils an die Rahmenträger (16) gelenkig angeschlossen sind, dadurch gekennzeichnet, daß die Kupplungsvorrichtung (30) zwischen den beiden Gestängen (12) und einem Anschlußteil (Kupplungsbolzen 13) angeordnet ist und einen an das Zugfahrzeug anschließbaren und mit den Gestängen (12) verbindbaren Tragteil (34) aufweist, der mit Gelenkteilen derart bestückt ist, daß die Gestänge mit Bezug auf die Kupplungsvorrichtung (30) um eine bzw. um ihre Längsmittelachse drehen können und dabei eine Vertikalverstellung der Rahmenträger (16) zulassen.

2. Geräterahmen nach Anspruch 1, dadurch gekennzeichnet, daß die Kupplungsvorrichtung (30) zumindest ein Kugelgelenk (37) aufweist, das innerhalb einer Lagerfläche (36) eines Gelenkteiles (32) der Kupplungsvorrichtung (30) drehbar aufgenommen ist, wobei das Kugelgelenk (37) mit einer Bohrung zur Aufnahme eines Kupplungsbolzens (39) versehen ist, der das Kugelgelenk (37) mit dem zugehörigen Gestänge (12) verbindet.

3. Geräterahmen nach Anspruch 1 oder 2, dadurch gekennzeichnet, daß der Gelenkteil (32) der Kupplungsvorrichtung als Gabel mit zwei übereinander liegenden Schenkeln ausgebildet ist, in denen koaxial zueinander verlaufende Bohrungen (33) zur Aufnahme eines die Gabel mit der Anhängevorrichtung eines Zugfahrzeuges verbindenden Kupplungsbolzens (13) angeordnet sind.

4. Geräterahmen nach einem oder mehreren der vorhergehenden Ansprüche, dadurch gekennzeichnet, daß die Kupplungsvorrichtung (30) aus zwei nach vorne V-förmig zusammenlaufenden Gabeln gebildet ist, die zur Aufnahme eines gemeinsamen Kupplungsbolzens (13) ineinandergesteckt werden können.

5. Geräterahmen nach einem oder mehreren der vorhergehenden Ansprüche, dadurch gekennzeichnet, daß an einem jeden gabelförmigen Gelenkteil (32) ein Tragteil (34) zur Aufnahme von Kugelgelenken (37) angeschlossen ist, wobei die Tragteile (34) mit Bezug auf die in Fahrtrichtung verlaufende Längsmittelachse des Geräterahmens seitlich versetzt angeordnet sind und zwischen sich die beiden Gestänge (12) zum Anschluß des Geräterahmens an ein Zugfahrzeug aufnehmen.

6. Geräterahmen nach einem oder mehreren der vorhergehenden Ansprüche, dadurch gekennzeichnet, daß die in Arbeitsstellung V-förmig und in Transportstellung parallel zueinander verlaufenden, verstellbaren Gestänge (12) aus je einem Rohr gebildet sind, das an seinem in Fahrtrichtung vorne liegenden Ende je einen Tragteil (34) aufnimmt, wobei das in Fahrtrichtung hinten liegende Ende des Rohres an je einem quer verlaufenden, horizontal und vertikal verschwenkbaren Rahmenträger (16) angeschlossen ist, der bei einer Höhenbewegung eine Drehung des Rohres um seine horizontal verlaufende Längsachse bewirkt.

7. Geräterahmen nach einem oder mehreren der vorhergehenden Ansprüche, dadurch gekennzeichnet, daß der Tragteil (34) aus zwei über einen Steg miteinander verbundenen, diamantförmig ausgebildeten Aufnahmeteilen (35) besteht, in denen je ein allseitig bewegliches Kugelgelenk (37) aufgenommen ist, die über Kupplungsbolzen (39) innerhalb des rohrförmigen Gestänges (12) gesichert sind.

8. Geräterahmen nach Anspruch 7, dadurch gekennzeichnet, daß die Aufnahmeteile (35) je zwei obere und zwei untere V-förmig zueinander verlaufende Seiten aufweisen, die bei Drehung um eine horizontal verlaufende Längsmittelachse gegen die parallel zueinander verlaufenden Seitenwände des rohrförmigen Gestänges (12) zur Anlage kommen können.

9. Geräterahmen nach einem oder mehreren der vorhergehenden Ansprüche, dadurch gekennzeichnet, daß die Kupplungsbolzen (39) sich durch die Bohrungen (38) der Kugelgelenke (37) und durch die in den Seitenwänden der Gestänge (12) vorgesehenen Bohrungen erstrecken und mittels Federringen und Muttern (42) gesichert sind.

10. Geräterahmen nach Anspruch 9, dadurch gekennzeichnet, daß die Mittelachse der Bohrungen (38) der Kugelgelenke (37) in Normalstellung in einer in etwa horizontal verlaufenden und die Lagerflächen (36) der Kugelgelenke (37) in einer in etwa vertikal verlaufenden Ebene liegen.

1/3

FIG. 1

0155608

FIG. 2

FIG. 3

FIG. 4

FIG. 5

FIG. 7

FIG. 6